# EUROPEAN PATENT SPECIFICATION

(11) **EP 2 433 072 B1**
(45) Date of publication and mention of the grant of the patent: **10.09.2014**
(21) Application number: 10718605.8
(22) Date of filing: 11.05.2010
(51) Int. Cl.: F25D 29/00, F25D 25/02

(54) **A REFRIGERATOR COMPRISING A SHELF**
KÜHLSCHRANK MIT EINEM REGAL
RÉFRIGÉRATEUR COMPORTANT UNE CLAYETTE

(30) Priority: 22.05.2009 TR 200903978
(43) Date of publication of application: 28.03.2012
(73) Proprietor: Arçelik Anonim Sirketi, 34950 Istanbul (TR)
(72) Inventor: FESLIGIL, Ahmet, Onder, 34950 Istanbul (TR); HACIOGLU, Mehmet, Cemal, 34950 Istanbul (TR); KAHRAMAN, Soner, 34950 Istanbul (TR); MOZA, Ahmet, Onur, 34950 Istanbul (TR)
(86) International application number: PCT/EP2010/056446
(87) International publication number: WO 2010/133478

(56) References cited:
- JP-A- 2002 303 479
- JP-A- 2007 010 208
- KR-B1- 100 889 119

## Description

The present invention relates to a refrigerator comprising shelves whereon items are placed and wherein excessive loading of the shelves is prevented.

In refrigerators, shelves are utilized inside the body or the door for the items to be easily emplaced and stored by the user. The weight of the load placed on the shelves should not exceed a certain value by taking into consideration the strength of the shelf. When the shelf is excessively loaded by the user, the shelf stretches and could result in accidents. Moreover, the shelf can be permanently deformed when the amount of stretching in the shelf exceeds a certain limit.

In the state of the art, weight sensors such as a strain gauge are utilized to determine the load on the shelves, however by means of data gathered by weight sensors, only detection of whether or not there is load on the shelf and the change in the amount and positions of loads on the shelf can be made but not whether or not the shelf is strained under excessive load.

In the refrigerator explained in the Japanese Patent Applications No. JP2002303479 and No. JP2007010208, the positions of the foodstuff placed on the shelf are determined by means of weight sensors disposed between the shelf and the shelf support.

In the United States of America Patent No. US4891755, a weight detection system utilized in mini bars is explained. Strain gauges are disposed under the stand at the lower side of the mini bar body for detecting the weight of the items placed thereon or removed from there.

In the refrigerator explained in the Japanese Patent Application No JP2008151357, a load sensor which detects the existence or nonexistence of foodstuff on the shelves in the storage compartment is utilized. When foodstuff is detected to be on the shelf, the region of the shelf is illuminated.

In the refrigerator explained in the Japanese Patent Application No. JP2006329597, it is detected by means of the weight sensor whether there is a change in the weight of the food on the shelf and when the packages of the food are determined to be opened, the expiry dates stored in the memory are updated.

The aim of the present invention is the realization of a refrigerator wherein the user is provided to be warned in the case the shelves are loaded excessively.

The refrigerator realized in order to attain the aim of the present invention is explicated in the claims.

The refrigerator of the present invention comprises a load control device mounted to the shelf channels or the shelf supports that extend one over the other and parallel to each other on the body side walls for holding the shelves that detects excessively loaded shelf and warns the user by illuminating the shelf or by a sound.

The load control device comprises a lower tray disposed on the shelf support at the side wall, helical compression springs disposed on the lower tray and a shelf holder emplaced on the springs and whereto the shelf is mounted. A channel is situated on the shelf holder whereto the side edge of the shelf is mounted and a light source that illuminates the shelf when the weight of the items placed on the shelf exceeds a predetermined limit amount of load.

In an embodiment of the present invention, the load control device comprises a push button situated on the lower tray and which changes the light source to the active mode when actuated by the shelf holder that moves downward with the effect of the load. The push button controls the light source with a cable that passes through the lower tray and the opening in the middle of the helical springs reaching the light source.

In another embodiment of the present invention, the load control device comprises a plug disposed on the lower tray for delivering electric energy to the light source and a socket under the shelf holder which is fitted into the plug when the shelf holder moves downward.

In yet another embodiment of the present invention, the light source in the load control device is energized by a battery and the battery is placed inside a battery casing situated in the load control device.

In an embodiment of the present invention, the shelf is produced from a transparent material, for example glass and the glass shelf is illuminated from the edges by the light source disposed inside the shelf holder channel in the load control device.

In another embodiment of the present invention, light piping particles which have light reflecting properties when light acts thereon are added to the transparent material from which the shelf is produced. Thus, when the shelf is illuminated by the light source, the light entirely spreads into the shelf body.

In another embodiment of the present invention, the load control device comprises a light source such as LED which is situated on the front face of the shelf facing the user and which is turned on when the shelf is excessively loaded.

The load control device single handedly performs the functions of both detecting the load and also warning the user when the shelf is loaded excessively thereby avoiding the accidents that could occur while loading the shelf. Since all the elements that the load control device comprises are integrated to one another, it can be mounted easily to the refrigerator and dismounted from there.

The refrigerator realized in order to attain the aim of the present invention is illustrated in the attached claims, where:

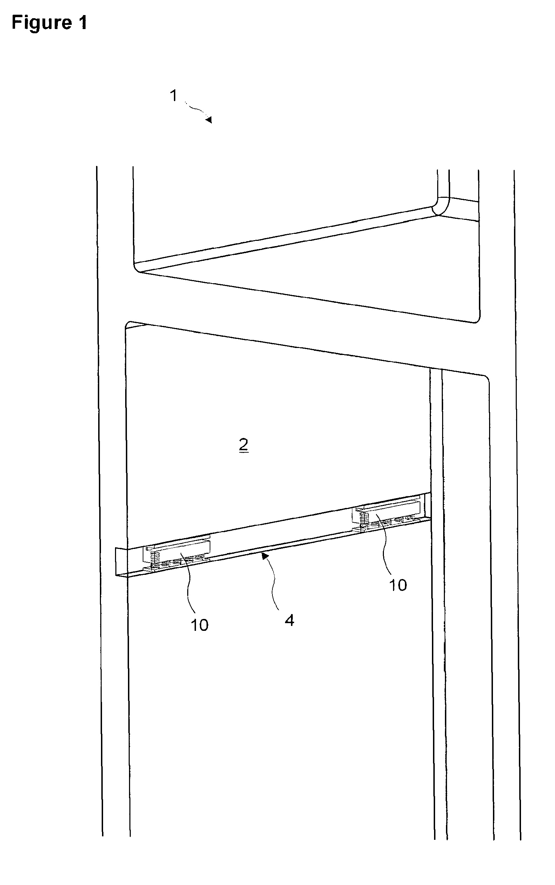

Figure 1 - is the schematic view of a refrigerator comprising load control devices disposed in the shelf support on the side wall.
Figure 2 - is the schematic view of a load control device on the shelf support.
Figure 3 - is the perspective view of a load control device comprising a push button.
Figure 4 - is the perspective view of a load control device comprising a plug and a socket.
Figure 5 - is the perspective view of a load control device comprising a battery casing..
Figure 6 - is the perspective view of a load control device comprising a LED.

The elements illustrated in the figures are numbered as follows:
1. Refrigerator
2. Side wall
3. Shelf
4. Shelf support
5. Lower tray
6. Spring
7. Channel
8. Light source
9. Shelf holder
10. Load control device
11. Push button
12. Plug
13. Socket
14. Battery casing

The refrigerator (1) comprises a body, more than one side wall (2), one or more shelves (3) utilized for emplacing items thereon and more than one shelf support (4) that extend inside the body in the horizontal direction from the front backwards opposite to each other on the inner side of the side walls (2) for supporting the shelves (3).

The refrigerator (1) of the present invention comprises a load control device (10) that is disposed between the shelf (3) and the shelf support (4) by being mounted on the edge of the shelf (3) on the side of the side wall (2), and which provides that the user is warned when the weight of the items emplaced on the shelf (3) or the load applied on the shelf (3) by the user exceeds a predetermined limit load value that the shelf (3) can carry without straining.

The load control device (10) warns the user by light or sound when the shelf (3) is loaded by the user in a way to strain the strength of the shelf (3) or if the user applies force on the shelf (3) while loading items thereon thereby preventing the deformation of the shelf (3) and avoiding accidents.

In the preferred embodiment of the present invention, the load control device (10) has
- a lower tray (5) disposed on the shelf support (4),
- one or more helical compression springs (6) disposed on the lower tray (5),
- a channel (7) disposed above the springs (6) whereto the side edge of the shelf (3) is mounted,
- a light source (8) that illuminates the shelf (3) if the weight of the items placed on the shelf (3) exceeds a predetermined limit load amount and
- a shelf holder (9) that moves toward the lower tray (5) together with the shelf (3) with the effect of the weight applied on the shelf (3) by compressing the springs (6) and changes the light source (8) to the active mode if the downward motion exceeds a predetermined limit distance (Wmax).

The springs (6) utilized in the load control device (10) are in free length in the unloaded state of the shelf (3). When the shelf (3) is loaded, the shelf holder (9) disposed on the springs (6) and fastened to the shelf (3) by the channel (7) compresses the springs (6) by moving downward. As long as the amount of the load loaded on the shelf (3) remains within determined limits, the downward motion distance of the shelf holder (9) is less than the maximum movement distance (Wmax) and in this case the light source (8) is kept in the passive mode thereby not illuminating the shelf (3).

If the amount of load placed on the shelf (3) exceeds the predetermined limit, the downward movement distance of the shelf holder (9) exceeds the maximum distance (Wmax), the shelf holder (9) compresses the springs (6) beneath approximately to their solid length and in this case the light source (8) is changed to the active mode thereby illuminating the shelf (3).

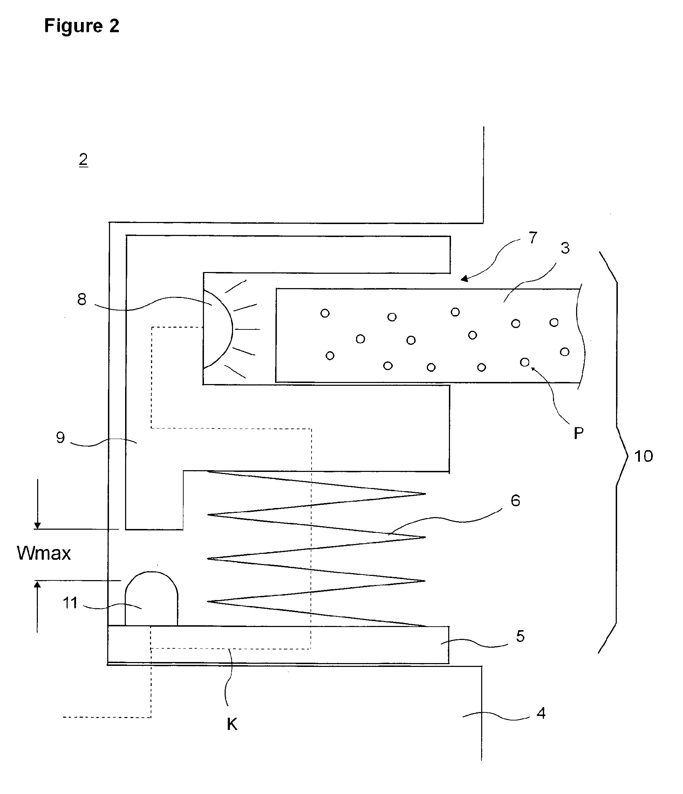

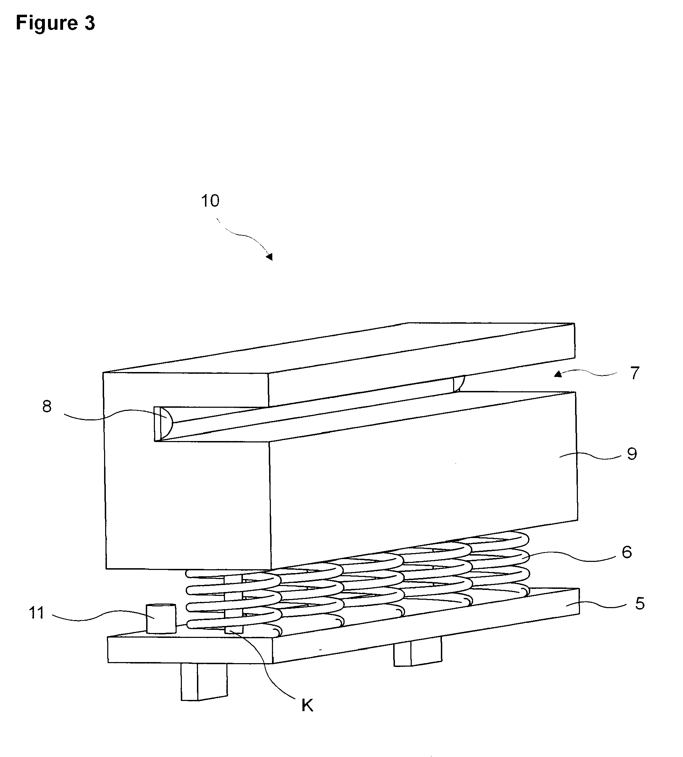

In an embodiment of the present invention, the load control device (10) comprises a push-button (11) situated on the lower tray (5) that is pressed on by the shelf holder (9) to activate the light source (8), which moves downward by exceeding the predetermined distance (Wmax) (Figures 2, 3). The push button (11) controls the light source (8) with a cable (K) that passes through the lower tray (5) and the opening in the middle of the helical springs (6) reaching the light source (8). When the shelf holder (9) moves downward with the effect of excessive load on the shelf (3) and presses on the push button (11), the light source (8) illuminates the shelf (3) and when the shelf holder (9) moves upward by the excessive load on the shelf (3) being removed, the contact of the shelf holder (9) with the push button (11) is interrupted and the light source (8) does not illuminate the shelf (3).

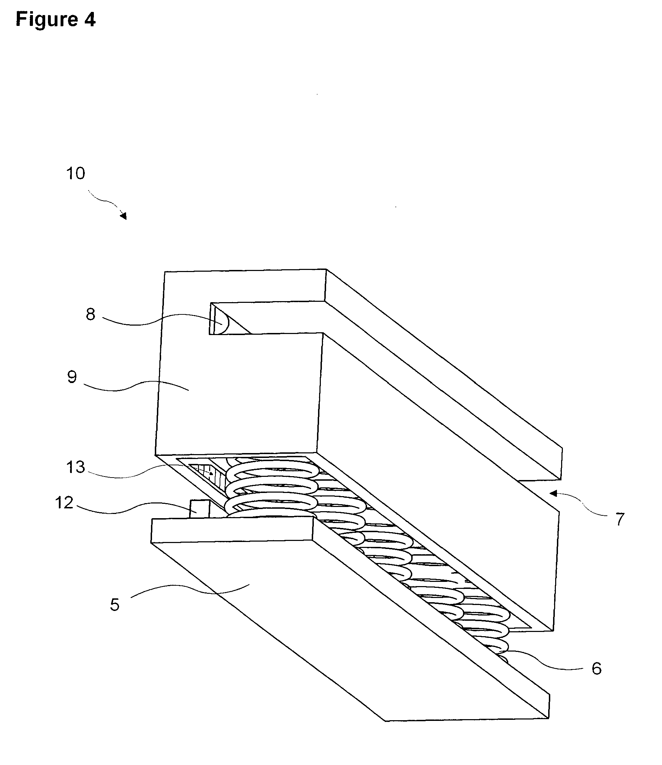

In another embodiment of the present invention, the load control device (10) comprises a plug (12) disposed on the lower tray (5) for delivering electric energy to the light source (8) and a socket (13) situated under the shelf holder (9) which is fitted into the plug (12) when the shelf holder (9) moves downward by exceeding the predetermined distance (Wmax) (Figure 4).

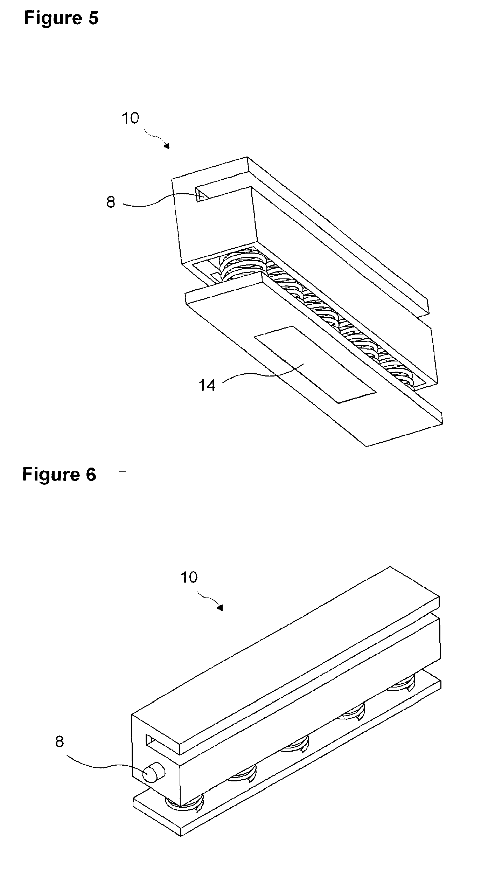

In another embodiment of the present invention, the load control device (10) comprises a battery for energizing the light source (8) and a battery casing (14) disposed inside the body of the lower tray (5) or the shelf holder (9) (Figure 5).

In an embodiment of the present invention, the shelf (3) is produced from a transparent material and the load control device (10) comprises a light source (8) disposed inside the channel (7) in the shelf holder (9) which illuminates the shelf (3) by delivering light to the side edge thereof (Figure 2).

In another embodiment of the present invention, light piping particles (P), having light reflecting properties when light acts thereon, are added to the transparent material from which the shelf (3) is produced (Figure 2). In this embodiment, when the shelf (3) is illuminated by the light source (8) inside the channel (7) whereto it is mounted, the light spreads to the entire shelf (3) body.

In yet another embodiment of the present invention, the load control device (10) comprises a light source (8) such as LED, which is disposed on the front face of the shelf holder (9) facing the user, which is turned on when the shelf (3) is loaded excessively and turned off when the load is removed (Figure 6).

The load control device (10) performs the functions of both detecting the load and also warning the user when the shelf (3) is loaded excessively thereby avoiding accidents that could occur while loading the shelf (3). The elements such as the spring (6), the shelf holder (9) providing the excessive load on the shelf (3) to be detected and the light source (8) enabling the user to be warned are integrated to one another, thus the load control device (10) can be easily mounted to the refrigerator (1), dismounted from there in a single piece.

In another embodiment of the present invention, the refrigerator (1) comprises an audio alarm device (not shown in the figures) which provides that the user is warned when the weight of the items placed on the shelf (3) or the load applied on the shelf (3) by the user exceeds a predetermined limit load amount that the shelf (3) can carry without straining.

It is to be understood that the present invention is not limited by the embodiments disclosed above and a person skilled in the art can easily introduce different embodiments according to the claims of the present invention.

## Claims

1. A refrigerator (1) comprising a body, more than one side wall (2), one or more shelves (3) used for emplacing items thereon, more than one shelf support (4) that extend inside the body in the horizontal direction opposite to each other from the front backwards on the inner side of the side walls (2) for supporting the shelves (3), and a load control device (10) that is disposed between the shelf (3) and the shelf support (4) by being mounted on a side edge of the shelf (3), **characterized in that** said load controller device (10) provides that the user is warned when the weight of items emplaced on the shelf (3) or a load applied on the shelf (3) by a user exceeds a predetermined limit load amount that the shelf (3) can carry without straining.

2. A refrigerator (1) as in Claim 1, **characterized in that** by the load control device (10) has a lower tray (5) disposed on the shelf support (4), /one or more helical compression springs (6) disposed on the lower tray (5), a channel (7) disposed above the springs (6) whereto the side edge of the shelf (3) is mounted, a light source (8) that illuminates the shelf (3) if the weight of the items placed on the shelf (3) exceeds a predetermined limit amount of load and a shelf holder (9) that moves toward the lower tray (5) together with the shelf (3) with the effect of the weight applied on the shelf (3) by compressing the springs (6) and if the downward motion exceeds a predetermined limit distance (Wmax) provides to change the light source (8) to an active mode.

3. A refrigerator (1) as in Claim 2, **characterized in that** the load control device (10) comprises a push button (11) situated on the lower tray (5) which is pressed to change the light source (8) to the active mode by the shelf holder (9) that moves downward by exceeding the predetermined distance (Wmax).

4. A refrigerator (1) as in Claim 3, **characterized in that** the load control device (10) comprises the push button (11) that controls the light source (8) with a cable (K) that reaches the light source (8) by passing through the lower tray (5) and an opening in the middle of the helical springs (6).

5. A refrigerator (1) as in Claim 2, **characterized in that** the load control device (10) comprises a plug (12) disposed on the lower tray (5) for delivering electric energy to the light source (8) and a socket (13) situated under the shelf holder (9) which is fitted into the plug (12) when the shelf holder (9) moves downward by exceeding the predetermined distance (Wmax).

6. A refrigerator (1) as in any one of the above Claims, **characterized in that** the load control device (10) comprises a battery for energizing the light source (8) and a battery casing (14) disposed inside the body of the lower tray (5) or the shelf holder (9).

7. A refrigerator (1) as in Claims 2-5, **characterized in that** the shelf is (3) produced from a transparent material and the load control device (10) comprises the light source (8) disposed inside the channel (7) in the shelf holder (9) which illuminates the shelf (3) by delivering light to the side edge thereof.

8. A refrigerator (1) as in any one of the above Claims, **characterized in that** the shelf is (3) produced from a material including light piping particles (P) that have light reflecting properties when light acts thereon.

9. A refrigerator (1) as in any one of the above Claims 2 to 6, **characterized in that** the load control device (10) comprises a light source (8) such as LED, which is disposed on the front face of the shelf holder (9) facing the user, which is turned on when the shelf (3) is loaded excessively and turned off when the load is removed.

10. A refrigerator (1) as in Claim 1, **characterized by** an audio alarm device which provides that the user is warned when the weight of the items placed on the shelf (3) or the load applied on the shelf (3) by the user exceeds a predetermined limit load amount that the shelf (3) can carry without straining.

## Patentansprüche

1. Kühlschrank (1), umfassend einen Gehäusekörper, mehrere Seitenwände (2), ein oder mehrere Regale (3), auf denen Artikel platziert werden, mehrere Regalträger (4), die sich einander gegenüber im Inneren des Gehäusekörpers in horizontaler Richtung an der Innenseite der Seitenwände (2) von vorne nach hinten erstrecken, um die Regale (3) zu tragen, und eine Laststeuervorrichtung (10), die zwischen dem Regal (3) und dem Regalträger (4) angeordnet ist, indem sie an einer Seitenkante des Regals (3) angebracht ist, **dadurch gekennzeichnet, dass** die Laststeuervorrichtung (10) dafür sorgt, dass der Benutzer gewarnt wird, wenn das Gewicht von Artikeln, die auf dem Regal (3) platziert werden, oder eine Last, die auf das Regal (3) von einem Benutzer ausgeübt wird, eine im Voraus festgelegte Grenzlastgröße übersteigt, die das Regal (3) ohne Überlastung tragen kann.

2. Kühlschrank (1) nach Anspruch 1, **dadurch gekennzeichnet, dass** die Laststeuervorrichtung (10) Folgendes aufweist:
- ein unteres Fach (5), das auf dem Regalträger (4) angeordnet ist,
- eine oder mehrere Spiraldruckfedern (6), die an dem unteren Regal (5) angeordnet sind,
- einen Kanal (7), der über den Federn (6) angeordnet ist, und an dem die Seitenkante des Regals (3) angebracht ist,
- eine Lichtquelle (8), die das Regal (3) beleuchtet, wenn das Gewicht der auf dem Regal (3) platzierten Artikel eine im Voraus festgelegte Grenzlastgröße übersteigt, und
- einen Regalhalter (9), der sich durch die Wirkung des auf dem Regal (3) lastenden Gewichts zusammen mit dem Regal (3) zum unteren Fach (5) hin bewegt, indem die Federn (6) zusammengedrückt werden, und wenn die Abwärtsbewegung eine im Voraus festgelegte Grenzstrecke (Wmax) übersteigt, dafür sorgt, dass die Lichtquelle (8) in einen aktiven Modus umschaltet.

3. Kühlschrank (1) nach Anspruch 2, **dadurch gekennzeichnet, dass** die Laststeuervorrichtung (10) eine Drucktaste (11) umfasst, die am unteren Fach (5) angeordnet ist und vom Regalhalter (9), der sich nach unten bewegt, während die im Voraus festgelegte Grenzstrecke (Wmax) überschritten wird, gedrückt wird, um die Lichtquelle (8) in den aktiven Modus umzuschalten.

4. Kühlschrank (1) nach Anspruch 3, **dadurch gekennzeichnet, dass** die Laststeuervorrichtung (10) die Drucktaste (11) umfasst, die die Lichtquelle (8) mit einem Kabel (K) steuert, das die Lichtquelle (8) erreicht, indem es durch da untere Fach (5) und eine Öffnung in der Mitte der Spiralfeder (6) verläuft.

5. Kühlschrank (1) nach Anspruch 2, **dadurch gekennzeichnet, dass** die Laststeuervorrichtung (10) einen Stecker (12), der am unteren Fach (5) angeordnet ist, um die Lichtquelle (8) mit elektrischer Energie zu versorgen, und eine Buchse (13) unter dem Regalhalter (9) umfasst, die mit dem Stecker (12) verbunden wird, wenn sich der Regalhalter (9) durch Überschreiten der im Voraus festgelegten Strecke (Wmax) nach unten bewegt.

6. Kühlschrank (1) nach einem der vorangehenden Ansprüche, **dadurch gekennzeichnet, dass** die Laststeuervorrichtung (10) eine Batterie zum Betreiben der Lichtquelle (8) und ein Batteriegehäuse (14) umfasst, das im Inneren des Körpers des unteren Fachs (5) oder des Regalhalters (9) angeordnet ist.

7. Kühlschrank (1) nach den Ansprüchen 2-5, **dadurch gekennzeichnet, dass** das Regal (3) aus einem transparenten Material hergestellt ist und dass die Laststeuervorrichtung (10) die Lichtquelle (8) im Kanal (7) im Regalhalter (9) angeordnet umfasst, die das Regal (3) durch Bereitstellen von Licht an dessen Seitenkante beleuchtet.

8. Kühlschrank (1) nach einem der vorangehenden Ansprüche, **dadurch gekennzeichnet, dass** das Regal (3) aus einem Material mit Licht leitenden Partikeln (P) hergestellt ist, die Licht reflektierende Eigenschaften aufweisen, wenn Licht auf sie einwirkt.

9. Kühlschrank (1) nach einem der vorangehenden Ansprüche 2 bis 6, **dadurch gekennzeichnet, dass** die Laststeuervorrichtung (10) eine Lichtquelle (8) wie etwa eine LED umfasst, die an der Stirnfläche des Regalhalters (9) zum Benutzer hingewandt angeordnet ist und eingeschaltet wird, wenn das Regal (3) überladen wird, und ausgeschaltet wird, wenn die Last entfernt wird.

10. Kühlschrank (1) nach Anspruch 1, **gekennzeichnet durch** eine Audioalarmvorrichtung, die dafür sorgt, dass der Benutzer gewarnt wird, wenn das Gewicht der auf dem Regal (3) platzierten Artikel oder die vom Benutzer auf das Regal (3) ausgeübte Last eine im Voraus festgelegte Grenzlastgröße übersteigt, die das Regal (3) ohne Überlastung tragen kann.

## Revendications

1. Un réfrigérateur (1) comprenant un corps, plus d'une paroi latérale (2), une ou plusieurs étagères (3) utilisées pour placer des articles sur celles-ci, plus d'un support d'étagère (4) qui s'étend dans le corps dans la direction horizontale d'une manière opposée l'un à l'autre de l'avant vers l'arrière sur le côté intérieur des parois latérales (2) afin de supporter les étagères (3), et un dispositif de commande de charge (10) qui est disposé entre l'étagère (3) et le support d'étagère (4) en étant monté sur un bord latérale de l'étagère (3), **caractérisé en ce que** ledit dispositif de commande de charge (10) assure que l'utilisateur est averti lorsque le poids des articles placés sur l'étagère (3) ou une charge appliquée sur l'étagère (3) par un utilisateur dépasse un montant de charge limite prédéterminé que l'étagère (3) peut supporter sans s'efforcer.

2. Un réfrigérateur (1) selon la Revendication 1, **caractérisé en ce que** le dispositif de commande de charge (10) présente
- une plaque inférieure (5) disposée sur le support d'étagère (4),
- un ou plusieurs ressorts hélicoïdaux de compression (6) disposés sur la plaque inférieure (5),
- un canal (7) situé sur les ressorts (6), auquel le bord latéral de l'étagère (3) est monté,
- une source de lumière (8) qui illumine l'étagère (3) si le poids des articles placés sur l'étagère (3) dépasse le montant de charge limite prédéterminé et
- un porte-étagère (9) qui se déplace vers la plaque inférieure (5) avec l'étagère (3) à cause du poids appliqué sur l'étagère (3) par comprimant les ressorts (6) et qui change la source de lumière (8) au mode actif si le mouvement vers le bas dépasse une distance limite prédéterminée (Wmax).

3. Un réfrigérateur (1) selon la Revendication 2, **caractérisé en ce que** le dispositif de commande de charge (10) comprend un bouton-poussoir (11) situé sur la plaque inférieure (5) qui est poussé afin de changer la source de lumière (8) au mode actif par le porte-étagère (9) qui se déplace vers le bas en dépassant la distance prédéterminée (Wmax).

4. Un réfrigérateur (1) selon la Revendication 3, **caractérisé en ce que** le dispositif de commande de charge (10) comprend le bouton-poussoir (11) qui commande la source de lumière (8) au moyen d'un câble (K) qui atteint la source de lumière (8) en passant à travers la plaque inférieure (5) et une ouverture au centre des ressorts hélicoïdaux (6).

5. Un réfrigérateur (1) selon la Revendication 2, **caractérisé en ce que** le dispositif de commande de charge (10) comprend une prise mâle (12) disposée sur la plaque inférieure (5) pour délivrer l'énergie électrique à la source de lumière (8) et une prise femelle (13) située au-dessous du porte-étagère (9), qui reçoit la prise mâle (12) lorsque le porte-étagère (9) se déplace vers le bas en dépassant la distance prédéterminée (Wmax).

6. Un réfrigérateur (1) selon l'une quelconque des revendications précédentes, **caractérisé en ce que** le dispositif de commande de charge (10) comprend une batterie pour alimenter la source de lumière (8) et un boîtier de batterie (14) disposé dans le corps de la plaque inférieure (5) ou le porte-étagère (9).

7. Un réfrigérateur (1) selon les Revendications de 2 à 5, **caractérisé en ce que** l'étagère (3) est fabriquée d'un matériau transparent et le dispositif de commande de charge (10) comprend la source de lumière (8) disposée dans le canal (7) dans le porte-étagère (9), qui illumine l'étagère (3) en délivrant la lumière vers le bord latéral de celle-ci.

8. Un réfrigérateur (1) selon l'une quelconque des revendications précédentes, **caractérisé en ce que** l'étagère (3) est fabriquée d'un matériau comprenant des particules de guidage de lumière (P) qui réfléchissent la lumière lorsque la lumière agit sur celles-ci.

9. Un réfrigérateur (1) selon l'une quelconque des revendications de 2 à 6, **caractérisé en ce que** le dispositif de commande de charge (10) comprend une source de lumière (8) tel que DEL, qui est disposée sur la face avant du porte-étagère (9) faisant face à l'utilisateur, qui est activée lorsque l'étagère (3) est chargée de manière excessive et désactivée lorsque la charge est supprimée.

10. Un réfrigérateur (1) selon la Revendication 1, **caractérisé par** un dispositif d'alarme sonore qui assure que l'utilisateur est averti lorsque le poids des articles placés sur l'étagère (3) ou la charge appliquée sur l'étagère (3) par l'utilisateur dépasse un montant de charge limite prédéterminé que l'étagère (3) peut supporter sans s'efforcer.
